# EUROPÄISCHE PATENTSCHRIFT

(11) **EP 2 457 219 B1**
(45) Veröffentlichungstag und Bekanntmachung des Hinweises auf die Patenterteilung: **14.12.2016**
(21) Anmeldenummer: 10747010.6
(22) Anmeldetag: 12.07.2010
(51) Int. Cl.: G06T 15/10

(54) **VERFAHREN UND ANORDNUNG ZUR GENERIERUNG VON DARSTELLUNGEN ANISOTROPER EIGENSCHAFTEN SOWIE EIN ENTSPRECHENDES COMPUTERPROGRAMM UND EIN ENTSPRECHENDES COMPUTERLESBARES SPEICHERMEDIUM**
METHOD AND ARRANGEMENT FOR GENERATING REPRESENTATIONS OF ANISOTROPIC PROPERTIES AND A CORRESPONDING COMPUTER PROGRAM AND A CORRESPONDING COMPUTER-READABLE STORAGE MEDIUM
PROCÉDÉ ET DISPOSITIF SERVANT À GÉNÉRER DES REPRÉSENTATIONS DE PROPRIÉTÉS ANISOTROPES ET PROGRAMME INFORMATIQUE CORRESPONDANT ET SUPPORT MÉMOIRE CORRESPONDANT LISIBLE PAR ORDINATEUR

(30) Priorität: 22.07.2009 DE 102009027940
(43) Veröffentlichungstag der Anmeldung: 30.05.2012
(73) Patentinhaber: Bruker Nano GmbH, 12489 Berlin (DE)
(72) Erfinder: NOLZE, Gert, 12524 Berlin (DE)
(74) Vertreter: Gulde & Partner
(86) Internationale Anmeldenummer: PCT/EP2010/059964
(87) Internationale Veröffentlichungsnummer: WO 2011/009748

(56) Entgegenhaltungen:
- DE-A1-102007 052 794
- US-A1- 2002 126 129
- BUSCHER M ET AL: "Learning with METIS: an interactive learning software for materials science", ADVANCED ENGINEERING MATERIALS WILEY-VCH VERLAG GMBH GERMANY, Bd. 6, Nr. 11, November 2004 (2004-11), Seiten 873-876, XP002619155, ISSN: 1438-1656
- Luca Lutterotti: "MAUD tutorial - Computing ODF from traditional PoleFigures using WIMV", Dipartimento di Ingegneria dei Materiali, Universit`a di Trento38050 Trento, Italy , 26. Dezember 2000 (2000-12-26), XP002619156, Gefunden im Internet: URL:http://www.ing.unitn.it/~maud/Tutorial /ODFfromPF/ODFfromPF.pdf [gefunden am 2011-01-27]
- YAMROM B ET AL: "Visualizing polycrystalline orientation microstructures with spherical color maps", VISUALIZATION, 1994., VISUALIZATION '94, PROCEEDINGS., IEEE CONFERENCE ON WASHINGTON, DC, USA 17-21 OCT. 1994, LOS ALAMITOS, CA, USA,IEEE COMPUT. SOC, 17. Oktober 1994 (1994-10-17), Seiten 46-51,CP5, XP010100622, DOI: DOI:10.1109/VISUAL.1994.346338 ISBN: 978-0-8186-6627-8
- Kurt Helming: "Texturapproximation durch Modell-komponenten", 1. Januar 1998 (1998-01-01), Cuvillier Verlag, Göttingen, Germany, XP002619157, ISBN: 3895886173 Seite 1 - Seite 50
- KO F Y ET AL: "Computation of standard projections for a triclinic system of arbitrary orientation", METALLOGRAPHY, AMERICAN ELSEVIER, NEW YORK, NY, US, vol. 5, no. 6, 1 December 1972 (1972-12-01), pages 501-513, XP024083044, ISSN: 0026-0800, DOI: 10.1016/0026-0800(72)90040-7 [retrieved on 1972-12-01]
- F. Y. KO, M. H. RICHMAN: "Computation of Standard Projections for a Triclinic System of Arbitrary Orientation", Brown University, Providence, Rhode Island 02912 , 1907, Retrieved from the Internet: URL:http://www.minersoc.org/pages/Archive- MM/Volume_18/18-84-122.pdf [retrieved on 2015-12-09]

## Beschreibung

Die Erfindung betrifft ein Verfahren und eine Anordnung zur Generierung und Darstellungen anisotroper Eigenschaften sowie ein entsprechendes Computerprogramm und ein entsprechendes computerlesbares Speichermedium, welches insbesondere in der Materialwissenschaft zur Darstellung von Texturen oder in der Diffraktometrie einsetzbar ist, beispielsweise zur schnellen Erzeugung stereographischer oder gnomonischer Projektionen anisotroper Eigenschaften (Polfiguren, Orientierungsdichteverteilungen, EBSD-Muster [EBSD patterns, EBSD = Electron Backscatter Diffraction] oder EBSP = Electron Backscatter Diffraction Pattern oder dgl.).

In der Materialwissenschaft stellt man die Orientierungsverteilung von Kristallen in einem polykristallinen Festkörper oft mit Hilfe der stereographischen Projektion dar. Ein einfaches Anwendungsgebiet sind Polfiguren, die die radiale Ausrichtung der Flächen im 3-dimensionalen Raum visualisieren. Um Polfiguren für *einen* Kristall zu erhalten, wird dieser in das Zentrum einer virtuellen Projektionskugel gestellt. Für die eigentliche Projektion der Kristallflächen verwendet man die jeweiligen Flächennormalen, das heißt, für jede Fläche diejenige Gerade, die a) senkrecht auf ihr steht und b) gleichzeitig durch das Kugelzentrum verläuft. Die Flächennormalen werden soweit verlängert, bis sie die Oberfläche der Projektionskugel schneiden. Diese Schnittpunkte werden als Pole (oder Flächenpole) bezeichnet und dienen als Projektionspunkte. Bei der stereografischen Projektion werden alle Pole vom Südpol der Projektionskugel (dem Projektionszentrum) aus auf eine Ebene projiziert, welche tangential durch den Nordpol der Projektionskugel verläuft. Die durch das Projektionszentrum (Südpol) und den Kugelmittelpunkt (und damit auch den Nordpol) verlaufende Gerade definiert gleichermaßen die Normale der Projektionsfläche.

Für polykristalline Materialien werden Polfiguren nicht nur für *einen* Kristall erstellt, sondern für eine Vielzahl von Kristallen oder vermessenen Kristallorientierungen des untersuchten Körpers generiert. Das können Hunderttausende oder Millionen sein, was einen entsprechenden Aufwand bei der Berechnung der Polfiguren bedeutet.

Zum besseren Verständnis einer Materialeigenschaft ist es oftmals erforderlich und wünschenswert, diese Verteilung von Punkten im Raum zu drehen, was einer realen Drehung von Hunderttausenden von Kristallen unterschiedlicher Orientierung gleichkommt. Gewöhnlich bedeutet das, immer wieder Polfiguren von verschiedenen Projektionszentren aus zu generieren, d.h. die im Mittelpunkt der Projektionskugel virtuell angeordneten Kristalle werden immer wieder aus verschiedenen Blickrichtungen betrachtet. Herkömmlicherweise werden dafür die Berechnungsschritte der stereografischen Projektion für alle Pole von dem neuen Projektionszentrum aus erneut durchgeführt. Bei Polfiguren, welche eine Vielzahl von Kristallen abbilden, bedeutet das einen enormen Rechenaufwand, der eine sogenannte real-time-Drehung praktisch unmöglich macht.

Aus der Veröffentlichung Büscher, M. und G. Gottstein: Learning with METIS: An Interactive Learning Software for Material Science, ADVANCED ENGINEERING MATERIALS 2004, 6, No. 11, S. 873-876, WILEY-VCH Verlag GmbH & Co. KGaA, Weinheim ist eine Software bekannt, welche das Studium von Materialeigenschaften erleichtern soll. Diese Software umfasst ein Polfigurensimulationsapplet, welches u.a. eine stereographische Projektion ausführt, um die Polfiguren zu veranschaulichen.

Eine Software zur Berechnung einer Orientierungsdichteverteilungsfunktion (orientation distribution function [ODF]) wird beschrieben in der Veröffentlichung Lutterotti, Luca: MAUD tutorial - Computing ODF from traditional Pole Figures using WIMV, Dipartimento di Ingegneria die Materiali, Universitä di Trento, gefunden am 27.01.2011 unter der URL: www.ing.unitn.it/~maud/Tutorial/ODFfromPF/ODFfromPF.pdf.

Ein Verfahren zur Analyse polykristalliner Strukturen wird vorgestellt in der Veröffentlichung Yamrom, Boris et al.: Visualizing Polycrystalline Orientation Microstructures with Sperical Color Maps, VISUALIZATION ,94, PROCEEDINGS, IEEE CONFERENCE ON WASHINGTON, DC, USA, 17-21 Oktober 1994, LOS ALAMITOS, CA, USA, IEEE COMPUT. SOC., Oktober 1994. Es wird vorgeschlagen, sphärische Farbabbildungen von Visualisierungen der Mikrostruktur von Polykristallen mit Schwarz-Weiß-Abbildungen zu kombinieren, die von elektronenmikroskopischen Aufnahmen stammen. Dies soll das Verständnis von polykristallinen Strukturen erleichtern.

Die Aufgabe der Erfindung besteht genau darin, ein Verfahren und eine Anordnung zur Generierung von Darstellungen anisotroper Eigenschaften (z.B. Orientierungsverteilungen, Polfiguren, EBSD patterns kristalliner Materialien) sowie ein entsprechendes Computerprogramm und ein entsprechendes computerlesbares Speichermedium bereitzustellen, welche die Nachteile der bekannten Lösungen vermeiden und insbesondere eine verbesserte Visualisierung dieser Eigenschaften gestatten.

Die Aufgabe wird erfindungsgemäß gelöst durch die Merkmale im kennzeichnenden Teil der Ansprüche 1 , 7, 9 und 10 im Zusammenwirken mit den Merkmalen im Oberbegriff. Zweckmäßige Ausgestaltungen der Erfindung sind in den Unteransprüchen enthalten.

Ein besonderer Vorteil des erfindungsgemäßen Verfahrens besteht darin, dass selbst die Darstellungen anisotroper Eigenschaften (z.B. der Dichteverteilung der oben beschriebenen Flächenpole) für unterschiedliche Projektionszentren sehr schnell generiert werden können. Dies wird dadurch erreicht, indem bei dem Verfahren zur Generierung von Darstellungen anisotroper Eigenschaften in einem ersten Schritt die Verteilung von durch Winkel beschriebenen Orientierungen der anisotropen Eigenschaften mindestens eines Kristalls ermittelt wird. Bei den untersuchten anisotropen, d.h. richtungsabhängigen Eigenschaften von Kristallen kann es sich insbesondere um die schon erwähnten Polfiguren, aber auch Orientierungsdichteverteilungen, EBSD-Muster o.dgl. handeln, wobei die Aufzählung nicht abschließend zu verstehen ist.

Der mindestens eine Kristall wird dabei im Zentrum der virtuellen Projektionskugel angeordnet, wobei die Besonderheit darin liegt, dass die Projektionsfläche durch die Kugelfläche definiert ist. Die Pole des mindestens einen Kristalls werden dabei, wie erwähnt, durch die Schnittpunkte der Flächennormalen des mindestens einen Kristalls mit der Kugelfläche repräsentiert. Im Ergebnis erhält man die Anordnung der Pole auf der Kugelfläche, was einer radialen Anordnung oder Verteilung der Pole gleichkommt und im Folgenden auch als solche bezeichnet werden soll. Analog lässt sich ein radial emittiertes Beugungsmuster (z.B. die patterns beim EBSD-Verfahren, Sternenhimmel) ebenfalls auf die Projektionskugel abbilden.

Erfindungsgemäß wird in einem nächsten Schritt computerintern ein Kugelmodell, z.B. eine virtuelle Kugel, erzeugt und die Oberfläche des Kugelmodells mit einer Darstellung der radialen Verteilung der anisotropen Eigenschaft versehen. In diesem Falle liegt die Darstellung der radialen Verteilung der anisotropen Eigenschaft in Form computerlesbarer Bilddaten vor, die ein Kugelmodell repräsentieren, dessen Oberfläche eine Wiedergabe der radialen Verteilung der anisotropen Eigenschaft aufweist. Dabei kann die gesamte Oberfläche eine Wiedergabe der radialen Verteilung aufweisen, oder es kann vorgesehen sein, dass nur ein Teil der Oberfläche die Darstellung der radialen Verteilung der anisotropen Eigenschaft wiedergibt.

In einer alternativen Ausführungsform der Erfindung wird die Verteilung der anisotropen Eigenschaft, für mehrere ebene Projektionsflächen berechnet (sinnvollerweise für die Flächen eines Polyeders, z.B. einen Würfel) und in computerlesbare Bilddaten gewandelt, beispielsweise in Daten einer Rastergrafik oder einer Bitmap. Diese computerlesbaren Bilddaten werden anschließend auf das 3D-Modell einer Kugelfläche geeignet projiziert. Vorzugsweise geschieht dies in Form einer so genannten Musterabbildung (Texture Mapping).

Anschließend wird die stereographische bzw. gnomonische Darstellung der anisotropen Eigenschaft - beispielsweise die Polfigur - generiert, indem die mit dem Muster der radialen Verteilung der anisotropen Eigenschaft versehene Kugelfläche geeignet abgebildet wird. Erfindungsgemäß wird für die Generierung von Darstellungen anisotroper Eigenschaften ein Grafikprogramm, vorzugsweise ein Standardgrafikprogramm, genutzt. Dabei ist vorgesehen, dass bei Generierung der Darstellung der mindestens einen anisotropen Eigenschaft, z.B. durch mehrere Bitmaps, mit Hilfe des Grafikprogramms erfolgt. Vorzugsweise wird aber auch für die Generierung des Kugelmodells oder für das Mapping der Bilddaten auf die Kugelinnenfläche ein Grafikprogramm genutzt. Der Einsatz eines Grafikprogramms bietet den Vorteil, dass auf eine Anzahl von Spezialfunktionen der Computergrafik und/oder auf spezielle Grafikhardware zurückgegriffen werden kann. Insbesondere erweist es sich dabei von Vorteil, wenn Funktionen bzw. Funktionalitäten einer Grafikkarte genutzt werden können. Dadurch wird das Verfahren zur Visualisierung von anisotropen Eigenschaften sehr beschleunigt. So ist eine schnelle, quasi unverzögerte Darstellung insbesondere der stereografischen oder gnomonischen Projektion von anisotropen Eigenschaften, wie beispielsweise von Polfiguren zur Darstellung von Texturen in der Materialwissenschaft, in Echtzeit möglich.

Allgemein ist für die Generierung der stereographischen oder gnomonischen Projektion unter Verwendung eines Grafikprogramms in einer bevorzugten Ausführungsform vorgesehen, dass das auf einer Projektionskugel wiedergegebene bzw. das auf die Projektionskugel gemappte Muster der radialen Verteilung einer anisotropen Eigenschaft (z.B. Polfiguren, Orientierungsdichteverteilungen, EBSD patterns...) von einem Projektionszentrum aus auf eine Projektionsfläche projiziert wird. Im vorliegenden Fall wird die Polfigur oder andere Darstellungen von radialen Verteilungen von anisotropen Eigenschaften unter Verwendung eines Grafikprogramms generiert, indem das Sichtvolumen einer virtuellen Kamera in Abhängigkeit von deren Lage genutzt wird, um die mit dem Muster der radialen Verteilung einer anisotropen Eigenschaft versehenen Kugeloberfläche verzerrt abzubilden, so dass sie einer stereographischen bzw. gnomonischen Projektion entspricht. Die Kamera stellt dabei das Projektionszentrum dar, welches im klassischen Sinne für die Erzeugung einer stereografischen oder gnomonischen Projektion Verwendung findet. Projektionszentrum bzw. Lage der virtuellen Kamera und virtuelle Kugel werden hierfür computerintern in einem virtuellen Raum angeordnet. Die Projektionsfläche ist dabei in einer bevorzugten Ausführungsform durch die Ebene definiert, die senkrecht zur Blickrichtung der Kamera tangential an der Projektionskugel liegt, d.h. durch den Nordpol der Kugel verläuft. Für einen Fachmann auf dem Gebiert der Computergrafik ist es klar, wie die grafischen Strukturen zur Definition der Objekte im virtuellen Raum, wie z.B. Projektionszentrum bzw. virtuelle Kamera und virtuelle Kugel gewählt werden müssen. Dabei ist die Blickrichtung der virtuellen Kamera durch Südpol und Zentrum der virtuellen Kugel definiert, wobei durch die Festlegung eines nichtzentrischen Sichtvolumens unter Beibehaltung der Blickrichtung trotzdem eine nichtzentriert erscheinende Darstellung realisiert werden kann (beliebige Ausschnittswahl). Das Muster der asymmetrischen Verteilung der darzustellenden Eigenschaft, welches als Bitmap auf der virtuellen Kugeloberfläche gemappt ist, wird durch diese Projektion verzerrt von der virtuellen Kamera erfasst. Eine *stereografische* Projektion des auf die Innenseite der virtuellen Kugelfläche gemappten Musters der radialen Verteilung der anisotropen Eigenschaft erhält man, wenn sich die virtuelle Kamera (gemäß der Konstruktionsprinzipien der stereographischen Projektion) direkt auf der Kugeloberfläche befindet mit Blickrichtung zum Mittelpunkt der von der Kugelfläche gebildeten Kugel. So definiert die Lage der Kamera immer den Südpol der Projektionskugel. Die *gnomonische* Projektion der identischen Szene erhält man einfach, indem man unter Beibehaltung der Blickrichtung die Position der Kamera vom Außendurchmesser der virtuellen Kugel in ihr Zentrum verschiebt. Durch die Definition der Lage der Kamera auf der Kugeloberfläche und damit auch der Ausrichtung der Blickrichtung der virtuellen Kamera (Fixpunkt ist bei der stereographischen Projektion das Kugelzentrum, d.h. die Blickrichtung der Kamera ist bei der stereographischen Projektion immer radial) wird festgelegt, welcher Bereich des virtuellen Raumes auf einer Bildausgabeeinrichtung wie z.B. einem Monitor oder Display eines Computers dargestellt wird. Im Ergebnis der beschriebenen Anordnung der Objekte im virtuellen Raum wird durch Wahl des Sichtvolumens der virtuellen Kamera immer ein Teil der Projektion der anisotropen Eigenschaft auf der Bildausgabeeinrichtung dargestellt.

Erfindungsgemäß wird zumindest die Visualisierung der mit der Textur, z.B. durch eine Bitmap, versehenen Kugelfläche durch Funktionen eines Computergrafikprogramms realisiert. Vorzugsweise jedoch werden auch die computerlesbaren Bilddaten, die virtuelle Kamera und die virtuelle Kugel als Objekte in einem Computergrafikprogramm, vorzugsweise einem Standardcomputergrafikprogramm, wie beispielsweise OpenGL oder DirectX, realisiert.

Eine Anordnung nach der Erfindung weist mindestens einen Chip und/oder Prozessor auf und ist derart eingerichtet, dass ein Verfahren zur Generierung der darzustellenden ansiotropen Eigenschaft (z.B. Polfigur. Orientierungsdichteverteilung, EBSD patterns...) ausführbar ist, wobei die folgenden Schritte ausgeführt werden:
- Ermittlung einer radialen Verteilung mindestens einer anisotropen Eigenschaft,
- Erzeugung eines Kugelmodells, dessen Oberfläche zumindest teilweise die radiale Verteilung einer Eigenschaft abbildet,
- Generierung der Darstellungen anisotroper Eigenschaften durch Projektion wenigstens eines Teils der auf der Kugelfläche abgebildeten computerlesbaren Bilddaten in die Ebene unter Verwendung eines Computergrafikprogramms.

Ein erfindungsgemäßes Computerprogramm ermöglicht es einer Datenverarbeitungseinrichtung, nachdem es in den Speicher der Datenverarbeitungseinrichtung geladen worden ist, ein Verfahren zur Generierung einer radialen, asymmetrischen Verteilung einer Eigenschaft durchzuführen, wobei das Verfahren folgende Schritte umfasst:
- Ermittlung einer Verteilung von durch Winkel beschriebenen Orientierungen mindestens einer anisotropen Eigenschaft,
- Erzeugung eines Kugelmodells, dessen Oberfläche zumindest teilweise eine Wiedergabe der radialen Verteilung aufweist,
- Generierung der Darstellungen anisotroper Eigenschaften durch Projektion wenigstens eines Teils der auf der Kugelfläche abgebildeten computerlesbaren Bilddaten in die Ebene unter Verwendung eines Computergrafikprogramms, wobei die Darstellung anisotroper Eigenschaften generiert wird, indem
- computerintern in einem virtuellen Raum eine Kugelfläche definiert wird, wobei die Kugelfläche zumindest teilweise die Wiedergabe der Verteilung aufweist,
- eine virtuelle Kamera im Kugelzentrum oder an einer vorgegebenen Position auf der Kugelfläche angeordnet wird, derart dass die optische Achse der virtuellen Kamera durch den Mittelpunkt der Kugel verläuft, und
- die Darstellung anisotroper Eigenschaften als Projektion der Kugelfläche auf eine virtuelle Projektionsfläche, die tangential die Kugelfläche berührt abgebildet wird,
oder
- computerintern in einem virtuellen Raum eine Polyederfläche definiert wird, wobei die Polyederfläche zumindest teilweise die Wiedergabe der Verteilung aufweist,
- eine virtuelle Kamera im Zentrum des Polyeders angeordnet wird, und
- die Darstellung anisotroper Eigenschaften als Projektion der Polyederfläche auf eine virtuelle Projektionsfläche, die orthogonal zu der optischen Achse der virtuellen Kamera ausgerichtet ist, abgebildet wird.

In einer weiteren bevorzugten Ausführungsform der Erfindung ist vorgesehen, dass das erfindungsgemäße Computerprogramm modular aufgebaut ist, wobei einzelne Module auf verschiedenen Datenverarbeitungseinrichtungen installiert sind.

Vorteilhafte Ausführungsformen sehen zusätzlich Computerprogramme vor, durch welche weitere in der Beschreibung angegebene Verfahrensschritte oder Verfahrensabläufe ausgeführt werden können.

Solche Computerprogramme können beispielsweise (gegen Gebühr oder unentgeltlich, frei zugänglich oder passwortgeschützt) downloadbar in einem Daten- oder Kommunikationsnetz bereitgestellt werden. Die so bereitgestellten Computerprogramme können dann durch ein Verfahren nutzbar gemacht werden, bei dem ein Computerprogramm nach Anspruch 20 aus einem elektronischen Datennetz, wie beispielsweise aus dem Internet, auf eine an das Datennetz angeschlossene Datenverarbeitungseinrichtung heruntergeladen wird.

Um das erfindungsgemäße Verfahren zur Generierung und Darstellung 3-dimensionaler, anisotroper Eigenschaften durchzuführen, ist vorgesehen, ein computerlesbares Speichermedium einzusetzen, auf dem ein Programm gespeichert ist, das es einer Datenverarbeitungseinrichtung ermöglicht, nachdem es in den Speicher der Datenverarbeitungseinrichtung geladen worden ist, ein Verfahren zur Generierung und Darstellung radialer, anisotroper Eigenschaften durchzuführen, wobei das Verfahren folgende Schritte umfasst:
- Ermittlung einer Verteilung von durch Winkel beschriebenen Orientierungen mindestens einer anisotropen Eigenschaft,
- Erzeugung eines Kugelmodells, dessen Oberfläche zumindest teilweise eine Wiedergabe der radialen Verteilung aufweist,
- Generierung der Darstellungen anisotroper Eigenschaften durch Projektion wenigstens eines Teils der auf der Kugelfläche abgebildeten computerlesbaren Bilddaten in die Ebene unter Verwendung eines Computergrafikprogramms, wobei die Berechnung der Projektion durch Grafikhardware erfolgt und die Darstellung anisotroper Eigenschaften generiert wird, indem
- computerintern in einem virtuellen Raum eine Kugelfläche definiert wird, wobei die Kugelfläche zumindest teilweise die Wiedergabe der Verteilung aufweist,
- eine virtuelle Kamera im Kugelzentrum oder an einer vorgegebenen Position auf der Kugelfläche angeordnet wird, derart dass die optische Achse der virtuellen Kamera durch den Mittelpunkt der Kugel verläuft, und
- die Darstellung anisotroper Eigenschaften als Projektion der Kugelfläche auf eine virtuelle Projektionsfläche, die tangential die Kugelfläche berührt abgebildet wird,
oder
- computerintern in einem virtuellen Raum eine Polyederfläche definiert wird, wobei die Polyederfläche zumindest teilweise die Wiedergabe der Verteilung aufweist,
- eine virtuelle Kamera im Zentrum des Polyeders angeordnet wird, und
- die Darstellung anisotroper Eigenschaften als Projektion der Polyederfläche auf eine virtuelle Projektionsfläche, die orthogonal zu der optischen Achse der virtuellen Kamera ausgerichtet ist, abgebildet wird.

Im Falle der gnomonischen Projektion kann in den obigen Ausführungen das Kugelmodell, die Projektionskugel bzw. die Kugelfläche durch ein Polygonmodell, ein Projektionspolygon bzw. Polygonfläche ersetzt werden.

Da bei computerintern generierten Modellen in verschiedenen Fällen nicht zwischen Innen- und Außenfläche unterschieden wird, sind Ausführungen der Erfindung möglich, bei denen die Darstellungen anisotroper Eigenschaften allgemein auf der Fläche bzw. Oberfläche des Kugel- oder Polyedermodells erfolgt.

Die Erfindung wird nachfolgend unter Bezugnahme auf die Figuren der Zeichnung an einem Ausführungsbeispiel (Eigenschaft: Polfigur) näher erläutert. Es zeigt:

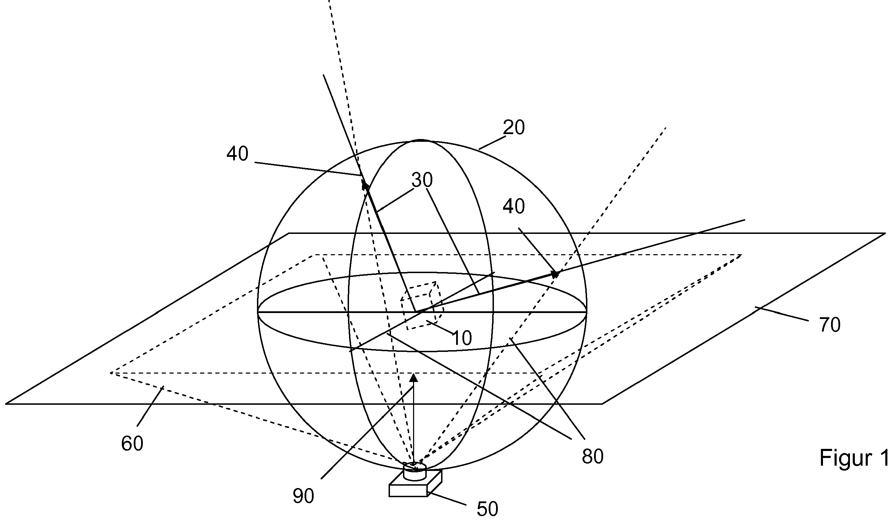

- Figur 1: Veranschaulichung der Erzeugung stereographischen Projektion am Beispiel einer Polfigur mit Hilfe einer virtuellen Kamera und

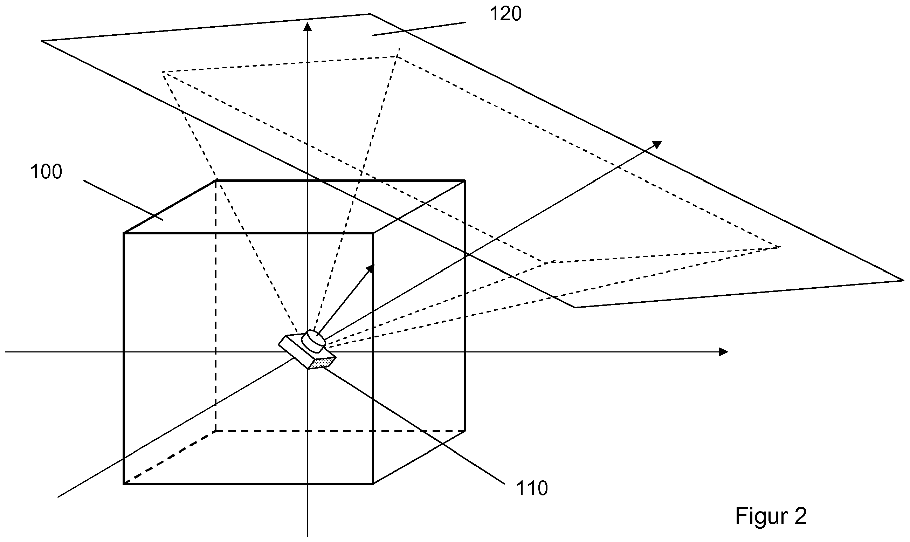

- Figur 2: Veranschaulichung einer gnomonischen Projektion unter Verwendung eines Würfels als Projektionspolygon.

Obwohl das Ausführungsbeispiel am Beispiel der Polfiguren näher erläutert wird, ist die Erfindung nicht auf die Generierung von Darstellungen dieser anisotropen Eigenschaft eingeschränkt. Vielmehr können durch die Erfindung in vergleichbarer Weise weitere andere richtungsabhängige Eigenschaften, wie beispielsweise die Orientierungsverteilungsdichte, EBSD-Muster o.dgl., dargestellt und visualisiert werden. Darüber hinaus können neben stereografischer und gnomonischer Projektion weitere Projektionen für die Abbildung der radialen Verteilung der anisotropen Eigenschaften in die Ebene genutzt werden.

Voraussetzung für die Darstellung von Polfiguren ist die Berechnung der radialen Verteilung der Pole auf der Projektionskugel 20. Hierfür werden für eine Anzahl von unterschiedlich orientierten Kristallen 10 - das kann ein einziger aber auch mehrere Millionen sein - die alle virtuell im Zentrum der Projektionskugel 20 angeordnet sind und von denen für jeden Kristall ausgewählte Flächennormalen 30 (Richtungen im reziproken Raum) oder Kristallrichtungen betrachtet werden, die im Folgenden allgemein als Vektoren bezeichnet werden sollen. Die Schnittpunkte der Vektoren 30 mit der Fläche der Projektionskugel 20 stellen die Pole (Durchstoßpunkte) 40 dar. Die radiale Verteilung der Pole 40 ergibt sich aus den Kristallorientierungen und wird durch eine einmalige Berechnung ermittelt.

Das Ergebnis dieser Berechnung, d.h. die radiale Verteilung der Pole aller untersuchten Kristalle 10 auf der Fläche der Projektionskugel 20, wird entweder auf der Kugeloberfläche berechnet, der z.B. alternativ als grafische Darstellung in einer Bilddatei, beispielsweise als Muster in einer Bitmap, gespeichert.

Zur Darstellung wird computerintern eine virtuelle Szene definiert, welche zumindest das 3D-Modell einer Projektionskugel 20 und eine virtuelle Kamera 50 umfasst. Diese virtuelle Szene wird mit Hilfe eines Grafikprogramms, wie beispielsweise OpenGL definiert. OpenGL stellt hierfür eine Vielzahl von Funktionen bereit. So kann die virtuelle 3D-Szene in einfacher Weise generiert werden.

Anschließend wird auf der Fläche der Projektionskugel 20 die Eigenschaft projiziert, d.h. z.B. mit der Bitmap als Oberflächentextur belegt. In einer Ausführungsform kann für diese Projektion eine spezielle OpenGL-Funktion genutzt werden. Bei der alternativen direkten Berechnung der Eigenschaft auf der Kugeloberfläche entfällt das Texture Mapping einer Bitmap.

Weiter wird mit Hilfe der durch das Grafikprogramm bereitgestellten Funktionen Position, Blickrichtung 90 (Orientierung), Sichtvolumen 60 und weitere Parameter der virtuellen Kamera 50 definiert. In einer speziellen Ausführungsform werden die Parameter derart vorgegeben, dass die virtuelle Kamera 50 vom Südpol der Projektionskugel 20 aus über den Mittelpunkt der Projektionskugel 20 auf die auf die Kugeloberfläche projizierte Bitmap schaut. Das so definierte Erscheinungsbild der Bitmap aus Sicht der virtuellen Kamera entspricht exakt der Definition der stereographischen Projektion.

In diesem Fall stellt die virtuelle Kamera 50 im klassischen Sinne das Projektionszentrum für die stereografische Projektion dar, mit welcher die Eigenschaft auf der Fläche der Projektionskugel 20 abgebildet wird, d.h., durch die Anordnung der Objekte von virtueller Kamera 50 und Projektionskugel 20, welche z.B. mit dem Muster der radialen Verteilung der Pole versehen ist, wird die auf die Projektionskugel 20 gemappte Darstellung der radialen Verteilung der Pole abgebildet, dass sie als Polfigur 80 sichtbar wird. Durch Variation des Sichtvolumens (Öffnungswinkel) lassen sich praktisch beliebige Bereiche der Polfigur in unterschiedlicher Vergrößerung darstellen, was durch das Grafikprogramm auf Mitteln zur visuellen Datenausgabe, wie beispielsweise einem Monitor, Display o.dgl., erfolgen kann.

Ist es nun erforderlich, dass die Polfigur von einem anderen Projektionszentrum aus betrachtet werden soll, genügt es bei Einsatz der Erfindung, Position, Blickrichtung 90 (Orientierung), Sichtvolumen 60 und dgl. der virtuellen Kamera 50 neu zu definieren oder aber die Projektionskugel 20 mit der darauf gemappten Textur entsprechend zu drehen. Für diese Operationen stellen Grafikprogramme, wie z.B. OpenGl oder DirecX, spezielle Funktionen zur Verfügung, durch welche die Operationen in Echtzeit oder im Wesentlichen in Echtzeit ausgeführt werden. Diese schnelle Ausführung wird dadurch erreicht, dass zum einen die Information (Verteilung der asymmetrischen Eigenschaft) nicht ständig neu berechnet werden muss, und zu anderen, dass die Grafikprogramme direkt mit einer Grafikkarte kommunizieren und eine Vielzahl von Operationen, wie Koordinatentransformationen, Projektionen, Skalierungen o.dgl. durch die Hardware der Grafikkarte deutlich schneller ausgeführt werden. Eine ständige Neuberechnung der stereografischen Projektion durch Software, wie es herkömmlich passiert, wird mit der Erfindung vermieden.

Verschiebt man die Position der Kamera 50 in das Zentrum der Projektionskugel 20 und bildet wieder die auf der Kugeloberfläche gemappte Textur ab, erhält man nur aufgrund dieser Positionsänderung anstelle der stereographischen die gnomonische Projektion, wie sie auf einem planen Projektionsschirm eines Flächendetektors (z.B. einer EBSD-Detektors) erscheint.

Die gnomonische Projektion lässt sich auch mittels speziell angepasster Bitmaps - z.B. berechnet für einen Würfel 100 - erzeugen, wenn man die Kamera 110 an den Punkt bewegt, für den die Bitmaps berechnet wurden. Da sich die Berechnung der Bitmaps auf ebenen Flächen besonders einfach gestaltet, lassen sich so gnomonische Projektionen besonders einfach generieren. Dazu kann jeder beliebige Polyeder eingesetzt werden, wobei der Würfel 100 sicherlich der einfachste ist. Erfolgt die Berechnung der Projektion vom Würfelzentrum aus auf eine Projektionsfläche 120, und werden alle sechs Flächen des Würfels 100 nacheinander berechnet und zusammengesetzt, erhält man selbst bei Drehung des Würfels 100 um sein Zentrum für jede Orientierung eine gnomonische Projektion der berechneten Bitmap, wenn die Kamera 110 exakt im Zentrum des Würfels 100 sitzt (also analog zur schon beschriebenen Kugel, denn diese stellt im mathematischen Sinne ein Polyeder mit unendlich vielen Flächen dar).

Die Erfindung beschränkt sich in ihrer Ausführungsform nicht auf die vorstehend angegebenen bevorzugten Ausführungsbeispiele. Vielmehr ist eine Anzahl von Varianten denkbar, die von der erfindungsgemäßen Anordnung und dem erfindungsgemäßen Verfahren auch bei grundsätzlich anders gearteten Ausführungen Gebrauch macht.

### Bezugszeichenliste

- 10: Kristalle
- 20: Projektionskugel
- 30: Flächennormale
- 40: Pol
- 50: virtuelle Kamera
- 60: Sichtvolumen
- 70: Projektionsfläche
- 80: Polfigur
- 90: Blickrichtung
- 100: Würfel
- 110: Kamera
- 120: Projektionsfläche

## Patentansprüche

1. Verfahren zur Generierung von Darstellungen anisotroper Eigenschaften von polykristallinen Festkörpern, wobei das Verfahren folgende Schritte umfasst:
- Ermittlung einer Verteilung von durch Winkel beschriebenen Orientierungen mindestens einer anisotropen Eigenschaft,
- Erzeugung eines computerinternen Kugel- oder Polyedermodells, deren Oberfläche jeweils zumindest teilweise eine Wiedergabe der Verteilung aufweist,
- Generierung der Darstellungen anisotroper Eigenschaften durch Projektion wenigstens eines Teils der auf der Kugel- oder Polyederfläche wiedergegebenen Verteilung in eine Ebene unter Verwendung eines Computergrafikprogramms, **dadurch gekennzeichnet, dass** die Berechnung der Projektion durch Grafikhardware erfolgt,
und
die Darstellung anisotroper Eigenschaften generiert wird, indem
- computerintern in einem virtuellen Raum eine Kugelfläche definiert wird, wobei die Kugelfläche zumindest teilweise die Wiedergabe der Verteilung aufweist,
- eine virtuelle Kamera (50) im Kugelzentrum oder an einer vorgegebenen Position auf der Kugelfläche angeordnet wird, derart dass die optische Achse der virtuellen Kamera (50) durch den Mittelpunkt der Kugel verläuft, und
- die Darstellung anisotroper Eigenschaften als Projektion der Kugelfläche auf eine virtuelle Projektionsfläche (70), die tangential die Kugelfläche berührt abgebildet wird,
oder
- computerintern in einem virtuellen Raum eine Polyederfläche definiert wird, wobei die Polyederfläche zumindest teilweise die Wiedergabe der Verteilung aufweist,
- eine virtuelle Kamera (110) im Zentrum des Polyeders angeordnet wird, und die Darstellung anisotroper Eigenschaften als Projektion der Polyederfläche auf eine virtuelle Projektionsfläche (120), die orthogonal zu der optischen Achse der virtuellen Kamera (110) ausgerichtet ist, abgebildet wird.

2. Verfahren nach Anspruch 1,
**dadurch gekennzeichnet, dass**
die auf der Oberfläche des Kugelmodells wiedergegebene Verteilung durch stereographische oder gnomonische Projektion in die Ebene projiziert wird oder dass die auf der Oberfläche des Poyedermodells wiedergegebene Verteilung durch gnomonische Projektion in die Ebene projiziert wird.

3. Verfahren nach einem der voranstehenden Ansprüche,
**dadurch gekennzeichnet, dass**
die Wiedergabe der Verteilung der mindestens einen anisotropen Eigenschaft auf der Oberfläche des Kugel- oder Polyedermodells erzeugt wird, indem computerlesbare Bilddaten erzeugt werden, wobei die computerlesbaren Bilddaten eine Darstellung der Verteilung der mindestens einen anisotropen Eigenschaft umfassen, und die computerlesbaren Bilddaten auf die Oberfläche des Kugel- oder Polyedermodells abgebildet werden.

4. Verfahren nach Anspruch 3,
**dadurch gekennzeichnet, dass**
zur Abbildung von computerlesbaren Bilddaten auf die Kugel- oder Polyederfläche ein Computergrafikprogramm, insbesondere eine 3D Grafik-Programmierschnittstelle (Application Programming Interface = API), wie z. B. OpenGL oder DirectX, genutzt wird.

5. Verfahren nach einem der voranstehenden Ansprüche,
**dadurch gekennzeichnet, dass**
für die Generierung von Darstellungen anisotroper Eigenschaften Standardgrafikhardware genutzt wird.

6. Verfahren nach einem der voranstehenden Ansprüche,
**dadurch gekennzeichnet, dass**
zur Abbildung der computerlesbaren Bilddaten auf die Kugel- oder Polyederfläche eine Funktion einer 3D Grafik-Programmierschnittstelle genutzt wird.

7. Anordnung mit mindestens einem Chip und/oder Prozessor, wobei die Anordnung derart eingerichtet ist, dass ein Verfahren zur Generierung von Darstellungen anisotroper Eigenschaften gemäß einem der Ansprüche 1 bis 6 ausführbar ist.

8. Anordnung nach Anspruch 7,
**dadurch gekennzeichnet, dass**
die Anordnung weiter eine Grafikkarte umfasst.

9. Computerprogramm, das es einer Datenverarbeitungseinrichtung ermöglicht, nachdem es in Speichermittel der Datenverarbeitungseinrichtung geladen worden ist, ein Verfahren zur Generierung von Darstellungen anisotroper Eigenschaften gemäß einem der Ansprüche 1 bis 6 durchzuführen.

10. Computerlesbares Speichermedium, auf dem ein Programm gespeichert ist, das es einer Datenverarbeitungseinrichtung ermöglicht, nachdem es in Speichermittel der Datenverarbeitungseinrichtung geladen worden ist, ein Verfahren zur Generierung von Darstellungen anisotroper Eigenschaften gemäß einem der Ansprüche 1 bis 6 durchzuführen.

11. Verfahren, bei dem ein Computerprogramm nach Anspruch 9 aus einem elektronischen Datennetz, wie beispielsweise aus dem Internet, auf eine an das Datennetz angeschlossene Datenverarbeitungseinrichtung heruntergeladen wird.

## Claims

1. A method for generating representations of anisotropic properties of polycrystalline solid bodies, the method comprising the following steps:
- determining a distribution of orientations of at least one anisotropic property, which orientations are described by angles,
- generating a computer-internal spherical or polyhedral model, the respective surface of which contains, at least in part, a reproduction of the distribution,
- generating the representations of anisotropic properties by projecting at least a part of the distribution reproduced on the surface of the sphere or polyhedron into a plane by using a computer graphics program, **characterized in that** the computation of the projection is carried out by graphics hardware and the representation of anisotropic properties is generated by
- defining a spherical surface in a virtual space in a computer, the spherical surface containing, at least in part, the reproduction of the distribution,
- arranging a virtual camera (50) at the centre of the sphere or at a prescribed position on the spherical surface such that the optical axis of the virtual camera (50) extends through the centre of the sphere, and
- displaying the representation of anisotropic properties as a projection of the spherical surface onto a virtual projection surface (70) that tangentially contacts the spherical surface,
or
- defining a polyhedral surface in a virtual space in a computer, the polyhedral surface containing, at least in part, the reproduction of the distribution,
- arranging a virtual camera (110) at the centre of the polyhedron, and displaying the representation of anisotropic properties as a projection of the polyhedral surface onto a virtual projection surface (120), aligned in an orthogonal direction to the optical axis of the virtual camera (110).

2. The method according to claim 1,
**characterized in that**
the distribution reproduced on the surface of the spherical model is projected into the plane by means of stereographic or gnomonic projection or that the distribution reproduced on the surface of the polyhedral model is projected into the plane by gnomonic projection.

3. The method according to any one of the preceding claims,
**characterized in that**
the reproduction of the distribution of the at least one anisotropic property is generated on the surface of the spherical or polyhedral model by generating computer-readable image data, the computer-readable image data comprising a representation of the distribution of the at least one anisotropic property and the computer-readable image data being displayed onto the surface of the spherical or polyhedral model.

4. The method according to claim 3,
**characterized in that**
a computer graphics program, in particular a 3D graphics programming interface (Application Programming Interface = API), as e.g. OpenGL or DirectX, is used to display computer-readable image data onto the spherical or polyhedral surface.

5. The method according to any one of the preceding claims,
**characterized in that**
standard graphics hardware is used for generating representations of anisotropic properties.

6. The method according to any one of the preceding claims,
**characterized in that**
a function of a 3D graphics programming interface is used to display the computer-readable image data onto the spherical or polyhedral surface.

7. An assembly containing at least one chip and/or processor, wherein the assembly is adapted such that a method for generating representations of anisotropic properties in accordance with any one of claims 1 through 6 is can be carried out.

8. The assembly according to claim 7,
**characterized in that**
the assembly further comprises a video card.

9. A computer program that, after it has been loaded into storage means of a data processing device, enables the data processing device to carry out a method for generating representations of anisotropic properties in accordance with any one of claims 1 through 6.

10. A computer-readable storage medium on which a program is stored that, after it has been loaded into storage means of a data processing device, enables the data processing device to carry out a method for generating representations of anisotropic properties in accordance with any one of claims 1 through 6.

11. A method in which a computer program according to claim 9 is downloaded from an electronic data network, such as the internet, to a data processing device connected to the data network.

## Revendications

1. Procédé servant à générer des représentations de propriétés anisotropes de solides polycristallins, le procédé comprenant les étapes suivantes consistant à :
- déterminer une répartition d'orientations décrites par des angles d'au moins une propriété anisotrope,
- générer un modèle sphérique ou polyédrique interne à un ordinateur, dont la surface comporte respectivement au moins en partie une reproduction de la répartition,
- générer les représentations de propriétés anisotropes par projection d'au moins une partie de la répartition reproduite sur la surface sphérique ou polyédrique dans un plan au moyen d'un programme graphique informatique, **caractérisé en ce que** le calcul de la projection se fait par du matériel graphique, et la représentation de propriétés anisotropes est générée en
- définissant une surface sphérique dans un espace virtuel de manière interne à l'ordinateur, la surface sphérique comportant au moins en partie la reproduction de la répartition,
- disposant une caméra virtuelle (50) au centre de la sphère ou en une position prédéfinie sur la surface sphérique, de telle manière que l'axe optique de la caméra virtuelle (50) passe par le centre de la sphère, et
- représentant la représentation de propriétés anisotropes comme projection de la surface sphérique sur une surface de projection virtuelle (70), qui touche la surface sphérique de manière tangentielle,
ou en
- définissant une surface polyédrique dans un espace virtuel de manière interne à l'ordinateur, la surface polyédrique comportant au moins en partie la reproduction de la répartition,
- disposant une caméra virtuelle (110) au centre du polyèdre, et représentant la représentation de propriétés anisotropes comme projection de la surface polyédrique sur une surface de projection virtuelle (120), qui est orientée perpendiculairement à l'axe optique de la caméra virtuelle (110).

2. Procédé selon la revendication 1,
**caractérisé en ce que**
la répartition reproduite sur la surface du modèle sphérique est projetée dans le plan par une projection stéréographique ou gnomonique ou **en ce que** la répartition reproduite sur la surface du modèle polyédrique est projetée dans le plan par projection gnomonique.

3. Procédé selon l'une quelconque des revendications précédentes,
**caractérisé en ce que**
la reproduction de la répartition de l'au moins une propriété anisotrope est générée sur la surface du modèle sphérique ou polyédrique en générant des données d'image lisibles par ordinateur, les données d'image lisibles par ordinateur comprenant une représentation de la répartition de l'au moins une propriété anisotrope, et les données d'image lisibles par ordinateur étant représentées sur la surface du modèle sphérique ou polyédrique.

4. Procédé selon la revendication 3,
**caractérisé en ce que**
un programme graphique informatique, en particulier une interface de programmation graphique 3D (Application Programming Interface = API), par exemple OpenGL ou DirectX, est utilisé pour la représentation de données d'image lisibles par ordinateur sur la surface sphérique ou polyédrique.

5. Procédé selon l'une quelconque des revendications précédentes,
**caractérisé en ce que**
du matériel graphique standard est utilisé pour générer des représentations de propriétés anisotropes.

6. Procédé selon l'une des revendications précédentes,
**caractérisé en ce que**
une fonction d'une interface de programmation graphique 3D est utilisée pour représenter les données d'image lisibles par ordinateur sur la surface sphérique ou polyédrique.

7. Dispositif comprenant au moins une puce et/ou un processeur, le dispositif étant configuré de telle manière qu'un procédé servant à générer des représentations de propriétés anisotropes selon l'une des revendications 1 à 6 peut être exécuté.

8. Dispositif selon la revendication 7,
**caractérisé en ce que**
le dispositif comprend en outre une carte graphique.

9. Programme informatique qui permet à un dispositif de traitement de données, après avoir été chargé dans des moyens de mémoire du dispositif de traitement de données, d'exécuter un procédé servant à générer des représentations de propriétés anisotropes selon l'une des revendications 1 à 6.

10. Support mémoire lisible par ordinateur, sur lequel un programme est enregistré, qui permet à un dispositif de traitement de données, après avoir été chargé dans des moyens de mémoire du dispositif de traitement de données, d'exécuter un procédé servant à générer des représentations de propriétés anisotropes selon l'une des revendications 1 à 6.

11. Procédé selon lequel un programme informatique selon la revendication 9 est téléchargé depuis un réseau de données électronique, par exemple l'Internet, sur un dispositif de traitement de données raccordé au réseau de données.
